# EUROPEAN PATENT SPECIFICATION

(11) **EP 0 596 041 B1**
(45) Date of publication and mention of the grant of the patent: **10.07.1996**
(21) Application number: 92918337.4
(22) Date of filing: 03.08.1992
(51) Int. Cl.: B03B 5/00, B09B 3/00

(54) **METHOD AND INSTALLATION FOR TREATING MERCURY-CONTAMINATED SOIL**
VERFAHREN UND VORRICHTUNG ZUR BEHANDLUNG VON MIT QUECKSILBER KONTAMINIERTEM BODEN
PROCEDE ET INSTALLATION DE TRAITEMENT DES TERRES CONTAMINEES PAR LE MERCURE

(30) Priority: 02.08.1991 NL 9101340
(43) Date of publication of application: 11.05.1994
(73) Proprietor: BEGEMANN MILIEUTECHNIEK B.V., NL-3312 AT Dordrecht (NL)
(72) Inventor: HAVERKAMP BEGEMANN, Roeland, NL-3312 AT Dordrecht (NL)
(74) Representative: de Bruijn, Leendert C.
(86) International application number: NL9200137
(87) International publication number: WO9302798

(56) References cited:
- EP-A- 0 287 540
- EP-A- 0 420 367
- CH-A- 625 491
- DD-C- 124 500
- DE-A- 3 928 427
- NL-A- 7 703 322
- US-A- 1 582 020

## Description

The invention relates in the first instance to a method for reducing the mercury content of mercury-contaminated soil, comprising:
feeding the mercury-contaminated soil to a sieve,
feeding the relatively fine material which has passed through the sieve together with water, a degreasing agent and a surface tension-lowering agent, to a shaking table of the Wilfley type, which is provided on its upper surface with ridges, the length of which increases from a first side of the table to a second side of the table, which second side is opposite said first side,
shaking the table parallel to said ridges, the mercury concentrate separated off being removed in the vicinity of a point essentially diagonally opposite the pulp feed and the treated material being collected at the said second side.

A method of this kind is disclosed in DDR patent 124500.

Mercury is released in the production of natural gas, in particular in the period when the gas produced is cooled from about 300°C to about 60°. It is true that this mercury is collected at the production well, but in practice it is found that spilling occurs. The spilt mercury penetrates into the soil, which gives rise to serious contamination. Mercury, which is able to contaminate the soil, can also be released during the production of salt and in certain electrolysis processes. Mercury-contaminated soil is also encountered in the vicinity of former mirror factories. Mercury-contaminated glass arises when used or rejected fluorescent tubes are collected and processed.

An extraction method is not unusual for treating mercury-contaminated soil. In this method the mercury is first brought into solution, the solution is discharged and the mercury is removed from the liquid. Evaporation in order to remove mercury from the soil is also a possibility. Both methods are laborious and environmentally unfriendly. Removal of mercury by evaporation is also dangerous for bystanders.

According to the above mentioned DDR patent 124500 the soil is classified in the wet state on a shaking sieve. The coarse material goes to a waste tip in the material which has passed through the sieve is passed, after it has been freed from sludge and the bulk of the water in a flow classifier, in the thickened state into a mercury trap in order to separate off the large mercury droplets and to feed these to a vessel. The overflow from this mercury trap is passed successively over two shaking tables provided with ridges, the mercury-containing concentrate from said tables being discharged into the said mercury vessel. The treated material is fed to a collection vessel. In order to counteract the floating of mercury drops, a moistening agent is added to the water which is sprayed onto the shaking sieve. The aim of this known method is to produce a high mercury content in the enriched concentrate, and the method is not suitable for reducing the mercury content in the soil for environmental reasons to less than 10 mg of mercury per kg of solids. Moreover, recycling of liquid and treatment of return liquid and sludge removal from the latter, does not take place.

The aim of the invention is to provide an efficient, simple and environmentally friendly method for the removal of mercury from the soil or other granular material, the treated product containing less than 10 mg of mercury per kg of solids.

To this end the method mentioned in the preamble is characterised in that to reduce the mercury content of the contaminated soil from a maximum of about 300 mg of mercury per kg of solids to less than 10 mg of mercury per kg of solids, the feeding of the soil to said sieve takes place in the essentially dry state, and the discharge end of the connecting channel between sieve and shaking table being below the liquid level, in that the material collected in a gutter at the second side of the shaking table is fed via a pump to at least one cyclone which is separating-off the sludge (<30-40 µm) from the pulp, in that the pulp in said cyclone is dewatered and the overflow material from the cyclone, mixed with a flocculant, is fed to a thickener device in order to separate off suspended sludge particles smaller than 30 to 40 µm and the water freed from suspended sludge is recycled to said sieve and/or shaking table.

An essential feature of the invention is that the contaminated material is transported in the essential dry state, without a pump, to a position above the shaking table. In the case of the transport of a wet feed with the aid of a pump, some of the mercury would collect in the bottom of the pump. The addition of a decreasing agent and a surface tensioning - lowering agent are also important for the yield of the process. Without the additions, some of the mercury globules would become floatable and move over the ridges with relatively lightweight soil grains. Recycling of the overflow from the cyclone is desirable in order to restrict the loss of liquid. A liquid (overflow from the cyclone) to be recycled to the sieve and/or shaking table must be freed from suspended sludge particles in order to be able to achieve the desired degree of purification. Fine sludge particles are also removed by this cyclone, with the overflow. The contaminated soil will in general also contain coarse particles and therefore it is necessary to separate these off before treatment on the shaking table. It is for this reasons that the contaminated material is subjected to a screening process before it is introduced on the shaking table, only the coarse material retained on a sieve of mesh width 2mm being discharged separately.

To remove the bulk of the residual mercury content in the water to be recycled to the sieve and/or shaking table, the water freed from the sludge will be passed to a sand filter and/or active carbon filter.

The aim of the requirement, in the present method, that the discharge end of the connecting channel between sieve and shaking table must be below the liquid level is to immerse the soil material in the liquid on the Wilfley table. The removal of suspended sludge particles from the soil and from the return liquid is necessary in order to achieve the desired degree of purity (less than 10 mm of mercury per kg of solids).

The invention also relates to an installation for carrying out the abovementioned method. DDR patent 124500 discloses such an installation having a shaking table of the Wilfley type which is provided on its upper surface with parallel ridges of a length which increases from a first table side to a second table side opposite said first side, a vibratory sieve with a discharge for sieved material which opens above a feed tray in the shaking table in the vicinity of one end of said first side of said table, a transport mechanism to feed soil to the vibratory sieve, a discharge, for mercury separated off, diagonally opposite the material fed to the shaking table.

In order to be able to carry out the abovementioned method the transport mechanism to feed the contaminated soil to the vibratory sieve does not have a pump and is suitable to transport the material in the essentially dry state, whereas the installation further comprises at least one cyclone in order to dewater the treated material, and a line in order to feed liquid separated off in the cyclone to a thickener for separating small sludge particles, as well as a line in order to recycle liquid freed from sludge to said sieve and/or shaking table.

The invention will now be illustrated in more detail with the aid of the Figures.

Figure 1 shows a perspective view of part of the installation which is used for the method according to the invention.

Figure 2 shows a side view of the complete installation.

Figure 3 shows a flow sheet.

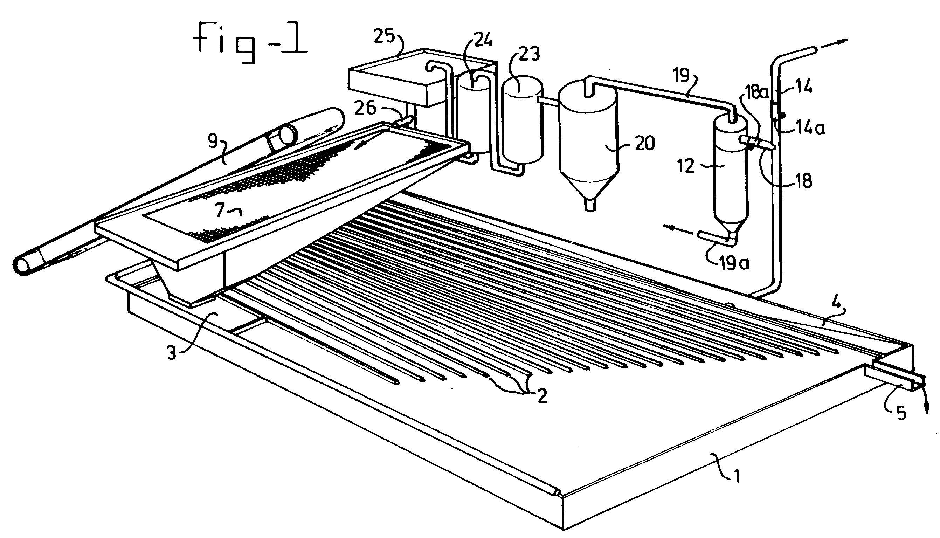

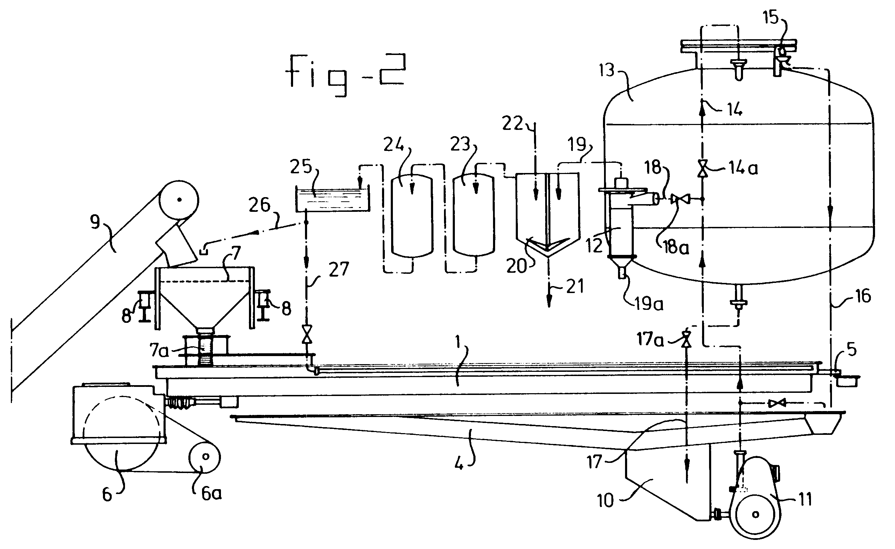

The installation shown in Figures 1 and 2 for removal of mercury from the contaminated soil comprises a shaking table 1 of the Wilfley type. This consists of a flat surface, usually covered with linoleum or plastic or rubber, and ridges 2 which are made on said covering and extend parallel to the longitudinal direction of the table.

At one corner of the table there is a feed tray 3, the length of the ridges increasing from the longitudinal edge of the table bordering the feed tray in the direction of the other longitudinal edge. A gutter 4 is made in the other longitudinal edge and there is a drain 5 at the corner diametrically opposite said feed corner. The shaking table can be made to shake in a direction parallel to the corrugations by means of an eccentric mechanism 6 driven by a motor 6a.

A vibratory sieve 7, provided with vibrating motors 8, is positioned above the shaking table. The discharge end of a feed conveyor 9 is located over the vibratory sieve.

The installation also comprises a pump tank 10, a pump 11, at least one cyclone 12 and a buffer tank 13. An overflow branch 15 from the tank 13 is connected to the gutter via a line 16, whilst a discharge at the bottom of the tank is connected via a line 17 containing the valve 17a to the pump tank 10.

Branch 18, provided with a valve 18a, from the up flow line 14 is connected to the tangential inlet of at least one cyclone 12 which is able partially to dewater the treated material fed into it. The overflow line 19 from the cyclone opens into a thickener 12, into which a flocculant (for example FeCl) can be fed via a line 22. The thickener separates off suspended sludge particles (<30 to 40 µm) and has a discharge 21 for the sludge material separated off. The overflow line of the thickener opens into a sand filter 23, the discharge of which, in its turn, opens into an active carbon filter 24, the discharge of which leads to a buffer tank 25. The sand filter and the active carbon filter serve to remove mercury from the liquid freed from sludge. Lines 26 and 27 lead from the buffer tank 25 to the sieve 7 and the table 1. The underflow from the cyclone is fed via discharge 19a to a dewatering sieve and further dewatered to give the treated product.

The installation functions as follows:
Dry granular material which is contaminated with mercury is fed via the loading conveyor 9, a conveyor belt or screw, from a bunker, which is not shown, to the vibratory sieve 7. Water is supplied to this sieve in an amount such that the mixture contains about 25% solids. The mesh size of the sieve is about 2 mm. The coarse material (for example about 5% of the original dry material) is discharged separately.

The pulp material which has passed through the sieve flows onto the feed tray 3 of the shaking table 1. A degreasing agent and a surface-tension-reducing agent are added to this pulp stream. Additional water is fed to the table in order to keep the mixture fluid. The discharge end of the connecting channel 7a between the sieve 7 and the shaking table 1 is located below the liquid level so that the particulate material is immersed in the liquid on the table, and floating of particles is counteracted.

Shaking of the table proceeds not in accordance with a sinusoidal curve but in accordance with a curve in which the speed of movement is increased to a maximum in the outward stroke and a return stroke starts with a maximum speed and this speed gradually decreases. In the outward stroke, the relatively heavy mercury particles which are in contact with the table acquire an acceleration which is virtually equal to that of the table. If the heavy mercury particles are at their maximum speed and the table is drawn back at the start of the return stroke, said heavy mercury particles will slightly overshoot and be moved in the longitudinal direction of the ridges. The relatively lightweight grains lying on the heavy particles are exposed to a stronger water flow than are the heavy particles and will be carried along by the water flow on the table, especially in the transverse direction of the table. The result is that the mercury collects in the gutter 5 and the treated material in the gutter 4. To intensify the separation effect, the height of the ridges could decrease in their longitudinal direction.

The pulp material which has collected in the gutter 4 passes into the pump tank 10 and is fed by the pump 11 via the lines 14 and 18 tangentially into the cyclone 12, freed from sludge (<30 - 40 µm) and about 65% dewatered. The water from the overflow of the cyclone is discharged via line 19 and is successively subjected to separation of sludge particles smaller than 30 to 40 µm in the thickener 20, and separation of mercury in the filters 23 and 24. The largely sludge-free and mercury-free water is recycled via the process water tank 25 and the lines 26 and 27 to the sieve 7 and the table 1. The cyclone 12 also has a discharge 19a for the underflow. The underflow is fed to a dewatering sieve, which is not shown, and further dewatered. The water issuing from the dewatering sieve is pumped to the buffer tank 13 in order to maintain the level in the pump tank 10, via the line 17.

As a result of the dry feeding of the material to the vibratory sieve 7, without the use of pumps, mercury is not able to volatilise and remain behind in a pump or line.

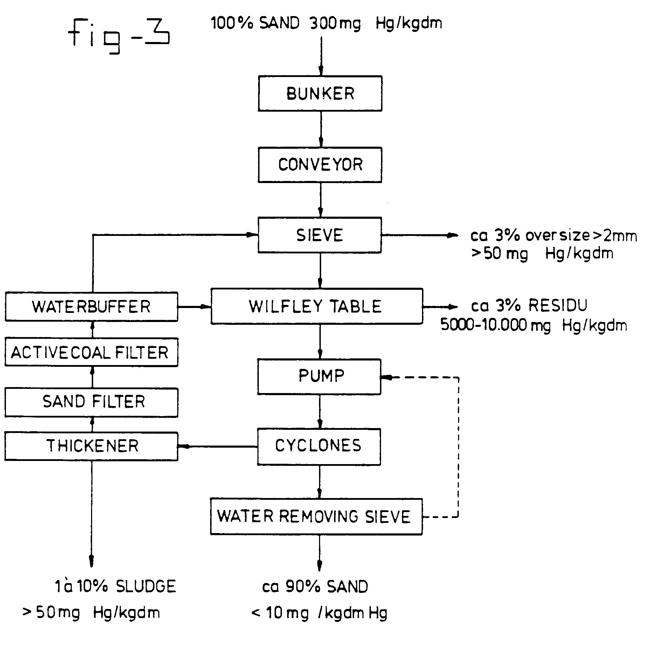

Figure 3 shows the successive steps of the process according to the invention schematically in a flow sheet.

This process is suitable for treating sand, clay, peat, sewer sludge, underwater beds, fluorescent tube waste (mercury-containing ground glass containing fluorescent powder), treatment sludge from waste water treatment installations and diverse other waste materials. The degreasing agent and the surface-tension-reducing agent added are important for the yield of the method. The degreasing agent can be a non-basic cleaner (for example CD45) which has a good moistening effect on contaminated surfaces. The dosage is, for example, 50 ppm. The surface-tension-lowering agent used can be a de-emulsifier for oil/water emulsions (for example CD659). The dosage is, for example, 200 ppm. The mercury content of the soil can be reduced to less than 10 mg of mercury per kg of solids and the treated liquid can, to a large extent, be re-used.

## Claims

1. Method for reducing the mercury content of mercury-contaminated soil, comprising:
feeding the mercury-contaminated soil to a sieve,
feeding the relatively fine material which has passed through the sieve together with water, a degreasing agent and a surface tension-lowering agent, to a shaking table of the Wilfley type, which is provided on its upper surface with ridges, the length of which increases from a first side of the table to a second side of the table, which second side is opposite said first side,
shaking the table parallel to said ridges, the mercury concentrate separated off being removed in the vicinity of a point essentially diagonally opposite the pulp feed and the treated material being collected at the said second side,
characterised in that to reduce the mercury content of the contaminated soil from a maximum of about 300 mg of mercury per kg of solids to less than 10 mg of mercury per kg of solids, the feeding of the soil to said sieve takes place in the essentially dry state, and the discharge end of the connecting channel between sieve and shaking table being below the liquid level, in that the material collected in a gutter at the second side of the shaking table is fed via a pump to at least one cyclone which is separating-off the sludge (<30-40 µm) from the pulp, in that the pulp in said cyclone is dewatered and the overflow material from the cyclone, mixed with a flocculant, is fed to a thickener device in order to separate off suspended sludge particles smaller than 30 to 40 µm and the water freed from suspended sludge is recycled to said sieve and/or shaking table.

2. Method according to Claim 1, characterised in that, before it is fed to said sieve and/or shaking table, the water freed from suspended sludge is treated in a sand filter and/or active carbon filter to remove mercury.

3. Installation for reducing the mercury content of mercury-contaminated soil according to the method of Claim 1, comprising a shaking table of the Wilfley type which is provided on its upper surface with parallel ridges of a length which increases from a first table side to a second table side opposite said first side, a vibratory sieve with a discharge for sieved material which opens above a feed tray in the shaking table in the vicinity of one end of said first side of said table, a transport mechanism to feed soil to the vibratory sieve, a discharge, for mercury separated off, diagonally opposite the material fed to the shaking table, characterised in that the transport mechanism to feed the contaminated soil to the vibratory sieve does not have a pump and is suitable to transport the material in the essentially dry state, in that the installation further comprises at least one cyclone in order to dewater the treated material, and a line in order to feed liquid separated off in the cyclone to a thickener for separating small sludge particles, as well as a line in order to recycle liquid freed from sludge to said sieve and/or shaking table.

4. Installation according to Claim 3, characterised in that a sand filter and/or active carbon filter to separate off mercury is incorporated in the line which extends from the thickener to the said sieve and/or shaking table.

5. Installation according to Claim 4, characterised by a pump tank and pump installed between the discharge for treated material from the shaking table and the cyclone, a dewatering sieve in order further to dewater material partially dewatered in the cyclone, a buffer tank in order to store liquid originating from the dewatering sieve, and a connection, leading from the buffer tank to the pump tank, in order to maintain the level in the pump tank.

## Patentansprüche

1. Verfahren zum Verringern des Quecksilberanteils von mit Quecksilber kontaminiertem Boden, umfassend:
- Einspeisen des mit Quecksilber kontaminierten Bodens in einen Sieb,
- Einspeisen des relativ feinen Stoffes, der durch das Sieb hindurchgetreten ist, zusammen mit Wasser, einem Entfettungsmittel und einem Mittel zum Herabsetzen der Oberflächenspannung in einen Schütteltisch des Wilfley-Typs, der auf seiner oberen Oberfläche mit Rippen versehen ist, deren Länge von einer ersten Seite des Tisches zu einer zweiten Seite des Tisches zunimmt, wobei die zweite Seite der ersten Seite entgegengesetzt ist,
- Schütteln des Tisches parallel zu den Rippen, wobei das abgetrennte Quecksilberkonzentrat in der Nähe eines Punktes entfernt wird, der im wesentlichen diagonal entgegengesetzt der Breizufuhr ist, und wobei das behandelte Material an der zweiten Seite gesammelt wird,
dadurch **gekennzeichnet**, daß
- um den Quecksilberanteil des kontaminierten Bodens von einem Maximum von etwa 300 mg Quecksilber pro kg Feststoffe auf weniger als 10 mg Quecksilber pro kg Feststoffe zu verringern, die Zufuhr des Bodens zu dem Sieb in im wesentlichen trockenem Zustand stattfindet, und das Auslaßende des Verbindungskanals zwischen Sieb und Schütteltisch unterhalb des Flüssigkeitspegels liegt,
- das in einem Abfluß an der zweiten Seite des Schütteltisches in einem Abfluß gesammelte Material über eine Pumpe in zumindest ein Zyklon eingespeist wird, das den Schlamm (<30-40µm) von dem Brei abtrennt,
- der Brei in dem Zyklon entwässert wird und das überfließende Material vom Zyklon mit einem Flockungsmittel vermischt in eine Eindickeinrichtung eingespeist wird, um suspendierte Schlammpartikel kleiner als 30 bis 40 µm abzutrennen und das von dem suspendierten Schlamm befreite Wasser zu dem Sieb und/oder Schütteltisch zurückgeführt wird.

2. Verfahren gemäß Anspruch 1,
dadurch **gekennzeichnet**, daß
das vom suspendierten Schlamm befreite Wasser, bevor es zu dem Sieb und/oder Schütteltisch gespeist wird, in einem Sandfilter und/oder Aktivkohlefilter behandelt wird, um Quecksilber zu entfernen.

3. Vorrichtung zum Verringern des Quecksilbergehalts von mit Quecksilber kontaminiertem Boden gemäß dem Verfahren von Anspruch 1, umfassend einen Schütteltisch des Wilfley-Typs, der auf seiner oberen Oberfläche mit parallelen Rippen einer Länge versehen ist, deren Länge von einer ersten Seite des Tisches zu einer zweiten Seite des Tisches entgegengesetzt der ersten Seite zunehmen, ein Vibrationssieb mit einem Auslaß für gesiebtes Material, das sich über einer Zufuhrschale im Schütteltisch in der Nähe eines Endes der ersten Seite des Tisches öffnet, einen Transportmechanismus zum Zuführen von Bodenmaterial zu dem Vibrationssieb, einen Auslaß für abgetrenntes Quecksilber, der diagonal entgegengesetzt zu dem in den Schütteltisch eingespeisten Material ist,
dadurch **gekennzeichnet**, daß
- der Transportmechanismus zum Zuführen des kontaminierten Bodens zum Vibrationssieb keine Pumpe besitzt und geeignet ist, das Material in im wesentlichen trockenem Zustand zu transportieren,
- die Vorrichtung weiterhin umfaßt zumindest ein Zyklon, um das behandelte Material zu entwässern, und eine Leitung, um im Zyklon abgetrennte Flüssigkeit in einen Eindicker zum Trennen kleiner Schlammpartikel einzuspeisen, wie auch eine Leitung, um die von Schlamm befreite Flüssigkeit zu dem Sieb und/oder Schütteltisch zurückzuführen.

4. Vorrichtung gemäß Anspruch 3,
dadurch **gekennzeichnet**, daß
ein Sandfilter und/oder Aktivkohlefilter zum Abtrennen von Quecksilber in die Leitung eingefügt ist, die sich von dem Eindicker zu dem Sieb und/oder Schütteltisch erstreckt.

5. Vorrichtung gemäß Anspruch 4,
**gekennzeichnet** durch
einen Pumpentank und eine Pumpe, die zwischen dem Auslaß für behandeltes Material vom Schütteltisch und dem Zyklon eingerichtet ist, ein Entwässerungssieb, um teilweise im Zyklon entwässertes Material weiter zu entwässern, einen Puffertank, um Flüssigkeit zu sammeln, die von dem Entwässerungssieb herrührt, und eine Verbindung, die von dem Puffertank zum Pumpentank führt, um den Pegel im Pumpentank aufrecht zu erhalten.

## Revendications

1. Procédé de reduction de la teneur en mercure de sol contaminé par le mercure comprenant les étapes consistant à :
alimenter un tamis par le sol contaminé par du mercure
charger le matériau relativement fin ayant traversé le tamis, ainsi que de l'eau, un agent dégraissant et un agent de réduction de la tension superficielle sur une table à secousses de type Wifley, dont la face supérieure est pourvue d'arêtes, dont la longueur augmente d'un côté de la table à un second côté de la table, ledit second côté étant situé à l'opposé dudit premier,
secouer la table parallèlement auxdites arêtes, le concentré de mercure séparé étant retiré au voisinage d'un point pratiquement diagonalement opposé au chargement de la pâte, et le matériau traité étant recueilli dudit second côté,
caractérisé par le fait de réduire la teneur en mercure du sol contaminé d'un maximum de 300 mg de mercure par kg de solides à moins de 10 mg de mercure par kg de solides, l'alimentation dudit tamis par le sol se faisant à l'état pratiquement sec, et les point de déversement du conduit reliant le tamis et la table à secousses étant en dessous du niveau du liquide, par le fait que le matériau recueilli dans une rigole située au second côté de la table à secousses est introduit par une pompe dans au moins un cyclone qui sépare la boue (>30-40 µm) de la pâte, par le fait que ledit cyclone est desséché et que le matériau débordant du cyclone, mélangé à un floculant, est introduit dans un système d'épaississement afin de séparer les particules en suspension de la boue de taille inférieure à 30 à 40 µm, et l'eau débarrassée de la boue est recyclé dans ledit tamis et/ou ladite table à secousses.

2. Procédé selon la revendication 1, caractérisé en ce que, avant être introduite dans ledit tamis et/ou sur ladite table à secousses, l'eau débarrassée de la boue est traitée dans un filtre de sable et/ou un filtre de charbon actif pour éliminer le mercure.

3. Installation destinée à réduire la teneur en mercure de sol contaminé par du mercure selon le procédé de la revendication 1, comprenant une table à secousses de type Wifley, dont la face supérieure est pourvue d'arêtes parallèles, dont la longueur augmente entrele premier côté de la table et le second côté, ledit second côté étant situé à l'opposé du premier, un tamis vibrant avec un point de déversement du matériau tamisé s'ouvrant au-dessus d'un bac d'alimentation de la table à secousses au voisinage d'une extrémité d'un premier côté de ladite table, un mécanisme de convoyage pour amener le sol au tamis vibrant, un point d'évacuation, pour le mercure séparé, diagonalement opposé au chargement du matériau sur la table à secousses, caractérisé en ce que le mécanisme de convoyage amenant le sol contaminé au tamis vibrant ne comprend pas de pompe et convient au transport de matériau essentiellement à l'état sec, en ce que l'installation comprend en outre au moins un cyclone permettant de dessécher le matériau traité et un circuit de canalisation permettant d'amener le liquide séparé dans le cyclone à un système d'épaississement permettant de séparer les petites particules de boue, ainsi qu'un circuit de canalisation permettant de recycler le liquide débarrassé de la boue dans ledit tamis et/ou ladite table à secousse.

4. Installation selon la revendication 3, caractérisée en ce qu'un filtre de sable et/ou un filtre de charbon destinés à séparer le mercure sont incorporés dans le circuit qui va du système d'épaississement audit tamis et/ou à ladite table à secousses.

5. Installation selon la revendication 4, caractérisée par un réservoir de pompe et une pompe installés entre le point de déversement du matériel traité provenant de la table à secousses et le cyclone, par un tamis desséchant permettant de dessécher davantage le matériau partiellement desséché dans le cyclone, par un réservoir de tampon permettant de stocker le liquide provenant du tamis desséchant, et une liaison, allant du réservoir de tampon au réservoir de pompe, de façon à maintenir le niveau dans le réservoir de pompe.
